# FASCICULE DE BREVET EUROPEEN

(11) **EP 1 557 588 B1**
(45) Date de publication et mention de la délivrance du brevet: **04.07.2007**
(21) Numéro de dépôt: 05290104.8
(22) Date de dépôt: 18.01.2005
(51) Int. Cl.: F16H 25/24

(54) **Dispositif de détection de transfert de charge par cisaillement d'un pion ruptible**
Detektionvorrichtung zur Lastübertragung mit einem Scherstift
Load transfer detection device through breakable shear pin

(30) Priorité: 21.01.2004 FR 0400539
(43) Date de publication de la demande: 27.07.2005
(73) Titulaire: Goodrich Actuation Systems SAS, 78530 Buc (FR)
(72) Inventeur: Port-Robach, Isabelle, 95170 Deuil la Barre (FR); Medina, Raphael, 95230 Soisy sous Montmorency (FR); Amarix, Rui, 60530 Morangles (FR); Dorval, Christian, 92700 Colombes (FR)
(74) Mandataire: Texier, Christian

(56) Documents cités:
- EP-A- 1 262 688
- EP-A- 1 283 384
- EP-A- 1 398 541
- FR-A- 2 830 916
- US-A- 4 273 006

## Description

L'invention concerne les vérins à vis dits "fail-safe", c'est-à-dire les vérins à vis dont les attaches avion et structure est doublée afin d'en augmenter le niveau de sécurité.

Les systèmes de vérin à vis pour l'actionnement d'un organe mobile d'aéronef disposent généralement de deux attaches : une attache dite attache avion par laquelle la vis est liée à la structure de l'aéronef et une attache dite attache structure par laquelle la vis est liée via un écrou à l'organe mobile à actionner.

En mode de fonctionnement normal, les liaisons vis-aéronef (attache avion) et vis-organe mobile (attache structure) sont assurées respectivement par des voies dites primaires. En cas de défaillance de la voie primaire d'une attache, la liaison est alors reprise par une voie de secours, dite voie secondaire.

On connaît ainsi des systèmes de vérin comportant au niveau de l'attache structure, un niveau de sécurité supplémentaire en la présence d'un second écrou (écrou secondaire) qui, séparé de la vis par un léger jeu lors du fonctionnement normal, reprend la charge de l'écrou primaire en cas de défaillance de ce dernier.

L'invention concerne plus particulièrement les systèmes de détection de la défaillance d'une attache, lors d'un transfert de charge de la voie primaire vers la voie secondaire.

Dans le cas de l'attache structure, l'invention concerne ainsi la détection du transfert de charge de l'écrou primaire vers l'écrou secondaire.

L'invention s'applique aux vérins à vis, par exemple quand ces vérins sont utilisés pour l'orientation d'un plan horizontal réglable (PHR) d'aéronef.

Un dispositif « fail-safe » certes sécuritaire, présente le danger qu'un fonctionnement reposant seulement sur la voie secondaire (par exemple l'écrou secondaire dans le cas de l'attache structure), après défaillance de la voie primaire (l'écrou primaire), ne soit pas détecté. Le dispositif ne comporte alors plus son niveau de sécurité supplémentaire, et perd par là son intérêt initial.

On cherche ici à signaler ce mode de fonctionnement le plus rapidement possible, afin d'éviter un mode de panne dormante.

Typiquement, dans ce type de dispositif, on a adopté, pour l'attache structure, des écrous secondaires susceptibles de se gripper lorsque opérant avec la vis, de sorte qu'ils ne puissent continuer à remplir la fonction de transmission du mouvement.

Toutefois, le grippage risque souvent de ne pas apparaître. Les efforts durant le vol peuvent par exemple ne pas être assez importants pour que l'écrou secondaire se grippe au contact de la vis.

La demanderesse a proposé dans sa demande de brevet EP 1398541, comprise dans l'état de la technique du titre de l'art. 54 (3) CBE, un vérin d'actionnement d'organe mobile comprenant un pion ruptible parcouru par une liaison électrique pour la détection d'un transfert de charge au niveau de l'attache structure. Le transfert de charge de la voie primaire vers la voie secondaire provoque la rupture du pion et une coupure de la liaison électrique le traversant.

Si un tel système à pion ruptible permet la détection du transfert de la charge vers la voie secondaire suite à la défaillance de la voie primaire, il n'est pas vérifiable.

Or la vérifiabilité peut de manière générale permettre de s'assurer aisément du bon état de fonctionnement du système de détection de transfert de charge, et en particulier que les pièces le constituant ne sont pas grippées ou que la connexion électrique traversant le pion n'est pas défectueuse.

Le but de l'invention est ainsi de fournir, tant au niveau de l'attache avion que de l'attache structure, un système de détection du transfert de charge sur la voie secondaire qui soit vérifiable.

Le document EP 1283384 présente un système d'actionnement conforme au préambule de la revendication 1.

A cet effet, l'invention propose, selon un premier aspect, un dispositif de détection du transfert de la charge d'une vis de vérin d'actionnement d'organe mobile depuis une voie primaire vers une voie secondaire, tel que défini à la revendication 1.

L'état de fonctionnement du dispositif selon l'invention pouvant être régulièrement vérifié, les fausses alertes (détection d'une panne inexistante, par exemple du fait d'une liaison électrique défectueuse ou d'un mauvais positionnement des pièces) sont évitées et le niveau de sécurité offert par le dispositif est accru (une défaillance sera effectivement détectée, par exemple du fait qu'un grippage des pièces neutralisant la détection peut être décelé).

Selon un autre aspect défini à la revendication 13, l'invention propose un vérin d'actionnement d'organe mobile comprenant un tel dispositif de détection au niveau de son attache avion.

Selon encore un autre aspect défini à la revendication 17, l'invention propose un vérin d'actionnement d'organe mobile comprenant un tel dispositif de détection au niveau de son attache structure.

D'autres buts, caractéristiques et avantages de l'invention apparaîtront à la lecture de la description détaillée qui va suivre, faite en référence aux figures annexées sur lesquelles :
- la figure 1 est une vue en coupe d'un dispositif de détection selon l'invention, lors du fonctionnement normal d'un système de vérin à vis ;
- la figure 2 est une vue en coupe d'un dispositif de détection selon l'invention, après rupture du pion suite à la défaillance de la voie primaire d'une attache (avion ou structure) du système de vérin à vis ;
- la figure 3 est une vue en coupe d'un dispositif de détection selon l'invention, lors de la vérification de son bon état de fonctionnement ;
- la figure 4 est une vue en coupe illustrant la détection de la défaillance de la voie primaire de l'attache avion d'un système de vérin à vis pouvant être réalisée grâce au dispositif vérifiable selon l'invention.

Comme on l'a vu précédemment, un système de vérin à vis pour l'actionnement d'un organe mobile d'aéronef comporte deux attaches : une attache avion par laquelle la vis est liée à la structure de l'aéronef (fuselage) et une attache structure par laquelle la vis est liée via un écrou à l'organe mobile à actionner.

Chacune de ces attaches dispose d'une voie secondaire de secours, apte à reprendre la charge de la vis en cas de défaillance de la voie primaire.

Le dispositif de détection selon le premier aspect de l'invention peut être utilisé afin de détecter la défaillance de la voie primaire de l'une ou l'autre des attaches avion et structure.

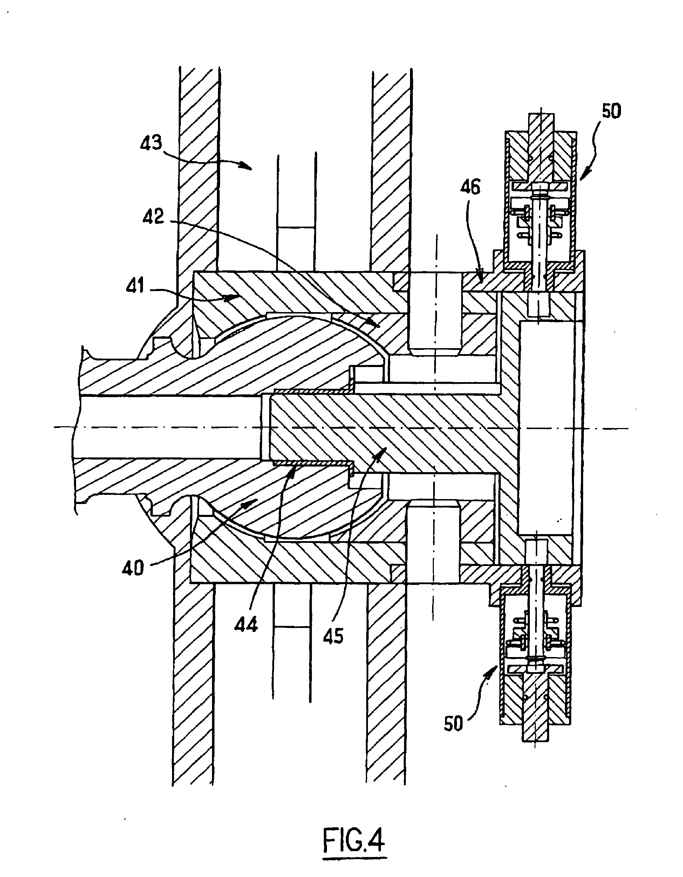

La description qui suit du dispositif selon l'invention concerne plus particulièrement l'attache structure. On comprendra cependant, notamment à l'examen de la figure 4, que celle-ci s'applique également à l'attache avion.

En fonctionnement normal, l'écrou primaire, ici à billes, est chargé et assure la transmission de la charge. L'écrou primaire transmet par exemple son mouvement à un plan horizontal réglable (PHR) d'un avion.

Typiquement, on prévoit que chacun des écrous primaire et secondaire présente une liaison qui lui est propre avec l'organe actionné.

Le transfert de charge sur l'écrou secondaire se fait alors par chargement de la liaison propre de l'écrou secondaire et déchargement de la liaison propre de l'écrou primaire.

L'écrou secondaire présente, en regard du pas de la vis, un jeu suffisant pour ne pas être chargé dans le cas du fonctionnement normal où l'écrou primaire reprend la charge.

Suite à une défaillance de la voie primaire, la voie secondaire reprend la charge par l'intermédiaire de l'écrou secondaire. L'écrou secondaire est alors mécaniquement placé sur le trajet des charges entre la structure de l'avion et l'organe mobile, et entre en contact avec la vis.

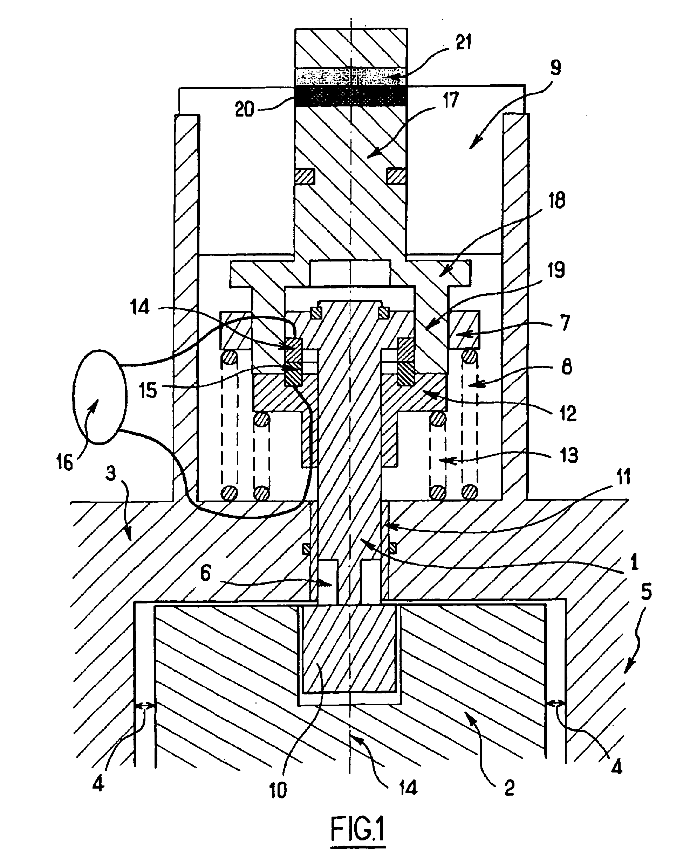

En référence aux figures 1, 2 et 3, le dispositif selon un mode de réalisation possible du premier aspect de l'invention comporte un pion ruptible 1 monté au niveau de l'attache structure d'un système de vérin à vis, de manière à venir traverser une pièce liée à la voie secondaire et une autre pièce liée à un organe solidaire de la voie primaire.

Le pion 1 est sensiblement cylindrique et s'étend longitudinalement le long de son axe principal 14.

Ladite pièce liée à la voie secondaire est ici un tourillon 2 de l'écrou secondaire (non représenté).

Ladite autre pièce liée à un organe solidaire de la voie primaire est ici un support 3 dont une partie inférieure est solidaire d'une plaque de transfert 5 assurant la liaison propre de l'écrou primaire.

Ladite plaque de transfert 5 entoure avec un faible jeu (illustré par les flèches 4) le tourillon 2 de l'écrou secondaire.

Le tourillon 2 présente sur une face externe une réservation dans laquelle pénètre l'une des extrémités (extrémité inférieure 10) du pion 1, réservation dont la bordure périphérique est recouverte par la partie inférieure dudit support 3 solidaire de la plaque de transfert 5.

Le pion 1 présente ainsi une zone de contact avec la partie inférieure dudit support 3, cette zone du pion 1 présentant avantageusement une section à casser 6 pouvant être cisaillée lors d'un mouvement relatif entre le support 3 et le tourillon 1.

L'extrémité inférieure 10 du pion 1 présente une section dont le diamètre est supérieur à celui de la section de la partie du pion traversant le support 3, de manière à ce que ladite extrémité inférieure du pion puisse être retenue dans le tourillon 2 en venant en butée sur le support 3.

Le support 3 s'étend également le long de l'axe principal 14 du pion de manière à former un tube cylindrique entourant le dispositif de détection selon l'invention.

Ledit tube comporte avantageusement un couvercle 9, permettant en particulier d'assurer le maintien du montage du dispositif selon l'invention, ainsi que sa protection vis-à-vis de l'environnement externe.

Le pion 1 présente, à son extrémité opposée à celle pénétrant dans la réservation du tourillon 2, une excroissance circonférentielle (plateau supérieur 7) pouvant être repoussée de la partie inférieure du support 3, le long de l'axe 14, par un premier organe de rappel élastique disposé entre ledit plateau supérieur 7 et la partie supérieure du support 3.

De préférence, ledit premier organe de rappel élastique est un ressort hélicoïdal 8 entourant le pion.

Lors du fonctionnement normal du système de vérin, le plateau supérieur 7 est maintenu immobile, la force d'extension du premier ressort 8 étant neutralisée par l'épaulement présent à l'extrémité inférieure 10 du pion 1 qui vient en butée sur la partie inférieure du support 3.

Un transfert de la charge sur la voie secondaire s'accompagne d'un mouvement relatif (autorisé par le jeu dont il a été fait état) entre la plaque de transfert 5 et le tourillon 2.

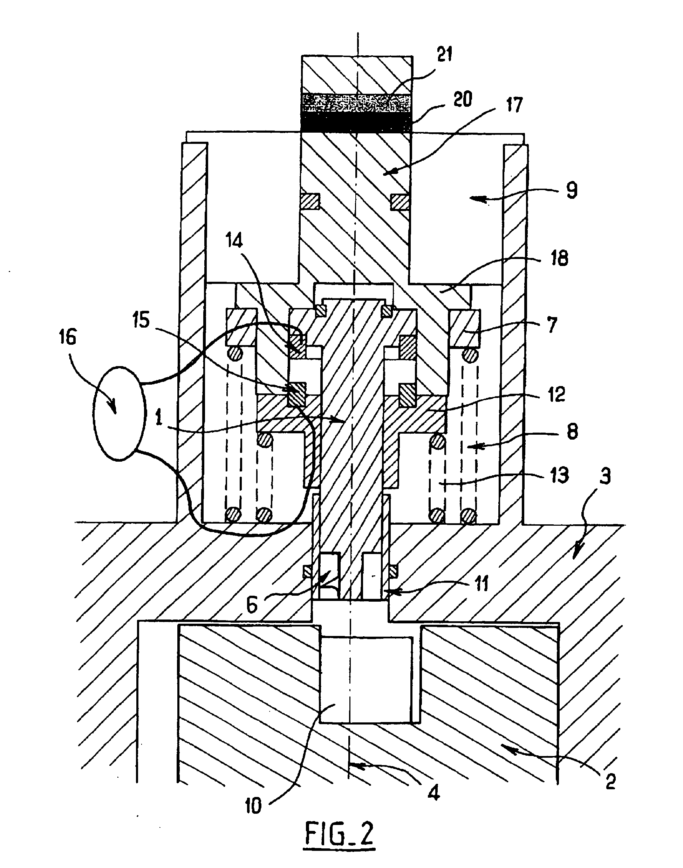

Ce mouvement relatif entraîne un cisaillement entre les pièces traversées par le pion 1, et donc une rupture du pion 1 au niveau de ladite section 6 (cf. figure 2).

Sous l'action du premier ressort 8, la partie du pion comportant le plateau supérieur 7 est alors écartée de la partie du pion restant dans le tourillon 2 (extrémité inférieure 10) selon un mouvement de translation le long de l'axe 14.

De manière préférentielle, le pion 1 comporte, au niveau de la zone qui est entourée par le support 3, un guidage 11 permettant d'éviter que des « bavures » dues à la rupture du pion puissent venir bloquer la séparation du pion en deux parties.

Le dispositif de détection selon un mode de réalisation possible de l'invention comporte en outre un plateau inférieur 12 venant entourer le pion 1, en étant intercalé entre le plateau supérieur 7 dudit pion 1 et la partie inférieure du support 3.

Les plateaux supérieur 7 et inférieur 12 présentent ainsi des faces en regard l'une de l'autre.

Le plateau inférieur 12 est relié à la partie inférieure du support 3 par un deuxième organe de rappel élastique 13 adapté pour amener le plateau inférieur 12 vers le plateau supérieur 7, de sorte que des éléments 14, 15 liés respectivement auxdits plateaux supérieur 7 et inférieur 12 soient en contact lors du fonctionnement normal du système de vérin (lorsque la voie primaire est chargée).

De manière alternative, lesdits éléments 14, 15 liés aux plateaux 7, 12 peuvent être éloignés l'un de l'autre d'une distance prédéfinie.

De préférence, ledit deuxième organe de rappel élastique est un ressort hélicoïdal 13 entourant le pion.

Les ressorts 8, 13 sont dimensionnés de sorte que les plateaux inférieur 12 et supérieur 7 sont séparés (ou tout du moins écartés d'une distance supérieure à ladite distance prédéfinie) :
- en cas de rupture du pion, lorsque sous l'action du premier ressort 8, la partie du pion comprenant le plateau supérieur 7 est éloignée de la partie inférieure du support 3, et donc écartée du plateau inférieur 12 ;
- en cas d'application d'une force sur le plateau inférieur 12 venant mettre le deuxième ressort 13 sous tension, de sorte que le plateau inférieur 12 coulisse autour du pion 1 le long de l'axe 14 en étant rapproché de la partie inférieure du support 3, et donc écarté du plateau supérieur 7.

Le dispositif de détection comporte des moyens de détection de la rupture du pion 1 aptes à déterminer que lesdits plateaux 12, 13 sont séparés (ou tout du moins éloignés d'une distance supérieure à celle prédéfinie les séparant en mode de fonctionnement normal).

Pour cela, les moyens de détection de la rupture peuvent comporter au moins un paire de capteurs, chacun des capteurs 14, 15 d'une paire étant disposé sur l'un respectivement des plateaux 7, 12 de manière à être deux à deux en regard.

Les moyens de détection de la rupture comprennent également des moyens (par exemple sous la forme d'un dispositif de surveillance 16) aptes à déterminer si l'écartement des capteurs est normal ou irrégulier.

Différentes technologies de capteurs peuvent être utilisées. On peut à cet effet citer de manière non limitative des capteurs à effet Hall, à induction, LVDT (initiales de l'expression anglo-saxonne. Linear Variable-Differential Transformer pour Transformateur Différentiel à Variation Linéaire).

En cas de rupture de pion, sous l'action du premier ressort 8, la partie du pion comprenant le plateau supérieur 7 translate le long de l'axe 4. Un capteur peut ainsi être utilisé afin de détecter cette translation et par conséquent la rupture du pion.

Selon un mode de réalisation préférentiel de l'invention illustré par les figures, les capteurs 14, 15 sont des contacts électriques reliés chacun par une liaison électrique au dispositif de surveillance 16.

Lesdits capteurs assurent ainsi une continuité électrique lorsque les plateaux sont au contact l'un de l'autre.

L'écartement des plateaux (suite à une rupture du pion ou à une mise sous tension du deuxième ressort 13) va empêcher la circulation du courant électrique surveillée par le dispositif de surveillance 16.

Le dispositif de détection comporte également des moyens de vérification, sans rupture du pion, du fonctionnement desdits moyens de détection de la rupture.

Selon un mode de réalisation possible, ces moyens de vérification comprennent un bouton poussoir 17 sensiblement cylindrique, guidé le long de l'axe 14, à l'aide du couvercle 9.

L'une des extrémités (extrémité supérieure) dudit bouton 17 dépasse avantageusement du couvercle 9 tandis que l'autre extrémité présente un plateau d'arrêt 18 disposé au-dessus du plateau supérieur 7.

Lors de la rupture du pion 1, le plateau supérieur 7, repoussé sous l'action du premier ressort 8, vient buter sur le plateau d'arrêt 18 du bouton poussoir 17. Comme cela est plus particulièrement représenté sur la figure 2, le plateau d'arrêt 18 est alors également repoussé, jusqu'à arrêter la course du plateau supérieur 7.

Ledit plateau d'arrêt 18 se prolonge sous la forme de doigts 19 passant à travers des ouvertures pratiquées à cet effet dans le plateau supérieur 7 et venant en contact avec la face du plateau inférieur 12 qui est en regard du plateau supérieur 7.

L'application d'une force (par exemple par un opérateur) sur l'extrémité supérieure du bouton poussoir 17 permet ainsi de venir appuyer les doigts 19 sur la surface du plateau inférieur 12, en mettant le deuxième ressort 13 sous tension.

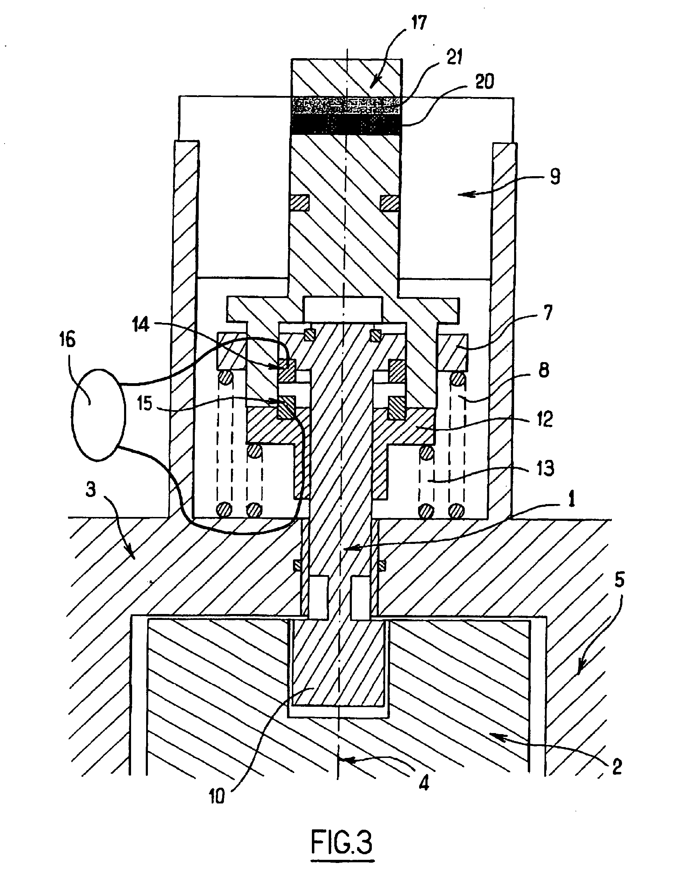

Le plateau inférieur 12 peut ainsi être repoussé vers la partie inférieure du support 3, de sorte que les plateaux 7, 12 sont écartés l'un de l'autre (cf. figure 3).

Les capteurs 14, 15 sont alors éloignés l'un de l'autre et le dispositif de surveillance 16 va alors détecter cet écartement anormal.

Il est ainsi possible, en venant appuyer sur le bouton 17, de vérifier le bon état de fonctionnement des moyens de détection de la rupture, et cela de manière non destructive, le pion n'étant pas rompu.

Le dispositif selon l'invention permet en particulier de s'assurer que les capteurs et le dispositif de surveillance fonctionnent correctement ou encore que les pièces ne sont pas grippées.

Finalement, la vérifiabilité du dispositif selon l'invention permet d'en accroître le niveau de sécurité, diminuant en conséquence le risque qu'un transfert de charge sur la voie secondaire ne soit pas immédiatement détecté.

Bien évidemment, lorsque la pression sur le bouton poussoir 17 est relâchée, le plateau inférieur 12 revient dans sa position initiale, sous l'action du deuxième ressort 13, le dispositif se retrouvant en mode de fonctionnement normal.

De manière préférentielle, le bouton 17 dispose de repères visuels 20, 21 (par exemple des bandes de couleurs différentes) permettant en particulier de confirmer une panne par une détection visuelle à l'examen dudit bouton 17.

En mode de fonctionnement normal (cf. figure 1), lorsque la voie primaire est chargée, seul l'un 21 des repères visuels est visible, l'autre 20 étant caché par le couvercle 9 du dispositif selon l'invention.

Suite à la rupture du pion 1 (cf. figure 2), du fait d'un transfert de la charge sur la voie secondaire, le bouton 17 est repoussé lorsque le plateau supérieur 7 vient buter contre le plateau de butée 18, entraînant celui-ci dans sa course, de sorte que les deux repères 21, 20 sont alors visibles. La panne peut alors être visuellement détectée.

Lors de la vérification (cf. figure 3), le bouton 17 étant pressé pour venir appuyer sur le plateau inférieur 12, les repères 20, 21 sont alors tous deux cachés. L'absence de repères visuels est significative de ce mode de fonctionnement.

En référence à la figure 4, on présente l'utilisation du dispositif selon l'invention au niveau de l'attache avion d'un système de vérin.

Une telle attache avion est généralement assurée via une barre d'attache primaire avec la structure de l'aéronef.

Au niveau de l'attache avion, la vis (non représentée) du système de vérin est ainsi liée en rotation avec une sphère 40 de la barre d'attache.

Lors du fonctionnement normal, lorsque la voie primaire est chargée, la sphère 40 tourne librement dans une rotule constituée par deux demi-rotules (respectivement une demi-rotule gauche 41 et demi-rotule droite 42) solidaires de la voie secondaire.

L'une des extrémités d'un cylindre de cisaillement 45 pénètre dans la sphère 40, ledit cylindre étant par conséquent lié à une pièce solidaire de la voie primaire.

Un élément roulant 44 est disposé au niveau de la zone de contact entre la sphère 40 et le cylindre 45 afin de neutraliser la rotation de la sphère dans la rotule. De telle sorte, le cylindre 45 ne présente pas de mouvement relatif vis-à-vis des éléments liés à la voie secondaire.

L'autre des extrémités du cylindre 45 comporte des bras adaptés pour accueillir chacun l'extrémité inférieure du pion d'un dispositif 50 de détection selon l'invention.

Au moins un dispositif vérifiable selon l'invention est disposé au niveau de l'attache avion de sorte que son pion ruptible traverse un support 46, solidaire de la demi-rotule droite 42 et donc de la voie secondaire, et l'un des bras dudit cylindre 45.

De manière préférentielle, et comme cela est représenté sur la figure 4, deux dispositifs 50 selon le premier aspect de l'invention sont utilisés pour la détection d'une éventuelle défaillance de la voie primaire.

Lors du fonctionnement normal, en l'absence de mouvement relatif entre le cylindre 45 et le support 46, le dispositif de détection n'est pas sollicité.

En revanche, lorsque la charge est transférée de la voie primaire vers la voie secondaire 43, la sphère 40 vient au contact des demi-rotules 41, 42, du fait des efforts de traction ou de compression sur la vis.

Le contact de la sphère 40 sur la demi-rotule droite 42 va alors générer un mouvement relatif entre le cylindre de cisaillement 45 et le support 46, de sorte que le pion va être rompu au niveau de sa zone à casser.

Le premier ressort va alors éloigner le plateau supérieur du plateau inférieur, ce qui va engendrer la détection du transfert de charge sur la voie secondaire au niveau de cette attache avion.

On rappelle ici que l'invention concerne également les vérins d'actionnement d'organe mobile comprenant un dispositif de détection tel que celui faisant l'objet de la description précédente, au niveau de son attache avion et de son attache structure.

## Revendications

1. Dispositif de détection du transfert de la charge d'une vis de vérin d'actionnement d'organe mobile depuis une voie primaire vers une voie secondaire, ladite voie secondaire étant disposée pour reprendre la charge de la vis en cas de défaillance de la voie primaire, ledit dispositif comprenant un pion ruptible (1) traversant une première pièce (2) liée à la voie secondaire et une deuxième pièce (3) liée à un organe (5) solidaire de la voie primaire, de sorte qu'un transfert de la charge vers la voie secondaire se traduit par un cisaillement entre lesdites pièces (2, 3) traversées par le pion (1), provoquant la rupture dudit pion (1),
ledit dispositif étant **caractérisé en ce qu**'il comprend :
• des moyens (14, 15, 16) de détection de la rupture du pion permettant de déterminer une défaillance de la voie primaire,
• des moyens de vérification, sans rupture du pion (1), du fonctionnement desdits moyens de détection, de manière à s'assurer du bon état du pion.

2. Dispositif selon la revendication 1, **caractérisé en ce que** le pion ruptible (1) comporte un plateau supérieur (7) et **en ce qu'**un premier organe de rappel élastique (8) s'appuyant d'une part sur ledit plateau supérieur (7), d'autre part sur ladite deuxième pièce (3) liée à un organe solidaire de la voie primaire produit une force d'écartement sur le pion (1), de sorte que la rupture du pion (1) provoque un écartement des deux parties du pion (1) séparées par la rupture.

3. Dispositif selon la revendication 2, **caractérisé en ce qu**'il comporte en outre :
• un plateau inférieur (12) entourant le pion (1) et disposé entre ledit plateau supérieur (7) et ladite deuxième pièce (3),
• un deuxième organe de rappel élastique (13) s'appuyant sur ledit plateau inférieur (12) et ladite deuxième pièce (3) de sorte que lesdits plateaux supérieur (7) et inférieur (12) puissent être écartés l'un de l'autre lorsque:
- en cas de rupture du pion (1), sous l'action dudit premier organe (8) de rappel, la partie du pion (1) comportant le plateau supérieur (7) est éloignée de ladite deuxième pièce (3),
- en cas d'application d'une force sur le plateau inférieur (12) mettant ledit deuxième organe de rappel (13) sous tension, le plateau inférieur (12) est rapproché de ladite deuxième pièce (3).

4. Dispositif selon la revendication 3, **caractérisé en ce que** lesdits moyens de détection comportent :
• au moins une paire de capteurs, chacun des capteurs (14, 15) d'une paire de capteurs étant disposé sur l'un respectivement desdits plateaux inférieur (12) et supérieur (7) de manière a ce que lesdits capteurs (14, 15) soient en regard deux à deux,
• des moyens (16) aptes à déterminer si l'écartement entre les capteurs est régulier ou non.

5. Dispositif selon la revendication 4, **caractérisé en ce que** l'écartement des capteurs est considéré comme non régulier dès lors que l'écartement entre les capteurs (14, 15) a augmenté du fait de la rupture du pion (1) ou de l'application d'une force suffisante sur le plateau inférieur (12).

6. Dispositif selon l'une des revendications 4 ou 5, **caractérisé en ce que** l'écartement régulier des capteurs est celui d'un écartement nul, lesdits capteurs (14, 15) n'étant dissociés que lors d'une rupture du pion (1) ou de l'application d'une force suffisante sur le plateau inférieur (12).

7. Dispositif selon la revendication 6, **caractérisé en ce que** les capteurs sont des contacts électriques (14,15) et **en ce que** lesdits moyens (16) aptes à déterminer si l'écartement entre les capteurs est régulier ou non sont des moyens de détection de la rupture d'une liaison électrique.

8. Dispositif selon l'une des revendications 4 à 7, **caractérisé en ce que** lesdits moyens de vérification des moyens de détection comprennent des moyens permettant d'écarter les capteurs (14, 15), de manière à vérifier que lesdits moyens de détection identifient bien un écartement irrégulier des capteurs.

9. Dispositif selon la revendication 8, **caractérisé en ce que** lesdits moyens permettant d'écarter les capteurs (14, 15) comprennent un bouton poussoir (17) pouvant être actionné afin de venir appuyer sur le plateau inférieur (12), de manière à écarter le plateau inférieur (12) du plateau supérieur (7) en mettant le deuxième organe (13) de rappel sous tension.

10. Dispositif selon la revendication 9, **caractérisé en ce que** le bouton poussoir (17) comporte un plateau d'arrêt (18) sur lequel le plateau supérieur (7) vient buter suite à la rupture du pion (1).

11. Dispositif selon la revendication 10, **caractérisé en ce que** le bouton poussoir (17) comporte des repères visuels (20, 21) permettant une détection visuelle d'un fonctionnement normal ou d'une défaillance de la voie primaire.

12. Dispositif selon l'une des revendications 3 à 11, **caractérisé en ce que** lesdits premier et deuxième organes de rappel élastique sont des ressorts hélicoïdaux (8, 13) entourant le pion (1) et **en ce que** ledit premier organe (8) de rappel entoure ledit deuxième organe (13) de rappel.

13. Vérin d'actionnement d'organe mobile comprenant :
• une vis et une attache structure par laquelle la vis est liée à l'organe mobile, ladite attache structure étant doublée en ce qu'elle comprend une voie primaire et une voie secondaire d'actionnement dudit organe, ladite voie secondaire étant prévue pour suppléer à une défaillance de la voie primaire, deux écrous dont un primaire et un secondaire étant pour cela engagés autour de la vis et liés chacun à l'organe mobile via une liaison propre, un mouvement relatif entre la vis et les écrous produisant ledit actionnement, l'écrou secondaire étant disposé pour reprendre la charge de la vis en cas de défaillance de l'écrou primaire,
• un pion ruptible (1) traversant un tourillon (2) de l'écrou secondaire et une partie inférieure d'un support (3) lié à une plaque de transfert (5) solidaire de la liaison propre entre l'écrou primaire et l'organe mobile, de sorte qu'un transfert de la charge vers la voie secondaire se traduit par un cisaillement entre le tourillon (2) et ledit support (3), provoquant la rupture dudit pion(1),
ledit vérin étant **caractérisé en ce qu**'il comporte des moyens (14, 15, 16) de détection de la rupture du pion (1) permettant de déterminer une défaillance de la voie primaire, et des moyens de vérification, sans rupture du pion, du fonctionnement desdits moyens de détection, de manière à s'assurer du bon état de fonctionnement du pion (1).

14. Vérin selon la revendication 13, **caractérisé en ce que** le tourillon (2) présente une réservation dans laquelle pénètre l'une des extrémités du pion (1) la bordure périphérique de ladite réservation étant recouverte par ladite partie inférieure du support (3) solidaire de la plaque de transfert (5).

15. Vérin selon la revendication 14, **caractérisé en ce que** le pion ruptible (1) comporte un plateau supérieur (7) à celle de ses extrémités qui ne pénètre pas dans le tourillon (2) et **en ce qu'**un premier organe de rappel élastique (8) s'appuyant d'une part sur ledit plateau supérieur (7) et d'autre part sur ladite partie inférieure du support (3) produit une force d'écartement sur le pion (1), de sorte que la rupture du pion (1) provoque un écartement des deux parties du pion (1) séparées par la rupture.

16. Vérin selon la revendication 15, **caractérisé en ce qu**'il comporte en outre :
• un plateau inférieur (12) entourant le pion (1) et disposé entre ledit plateau supérieur (7) et ladite partie inférieure du support (3),
• un deuxième organe de rappel élastique (13) s'appuyant sur ledit plateau inférieur (12) et ladite partie inférieure du support (3) de sorte que lesdits plateaux supérieur (7) et inférieur (12) puissent être écartés l'un de l'autre lorsque:
- en cas de rupture du pion (1), sous l'action dudit premier organe (8) de rappel, la partie du pion (1) comportant le plateau supérieur (7) est éloignée de ladite partie inférieure du support (3),
- en cas d'application d'une force sur le plateau inférieur (12) mettant ledit deuxième organe de rappel (13) sous tension, le plateau inférieur (12) est rapproché de ladite partie inférieure du support (3).

17. Vérin d'actionnement d'organe mobile d'aéronef comprenant :
• une vis et une attache avion par laquelle la vis est liée à l'aéronef, ladite attache avion étant doublée en ce qu'elle comprend une voie primaire et une voie secondaire d'attache à la structure de l'aéronef, ladite voie secondaire étant prévue pour suppléer à une défaillance de la voie primaire, la vis étant pour cela liée en rotation avec une sphère (40) d'une barre d'attache primaire à l'aéronef, ladite sphère tournant librement dans une rotule (41, 42) solidaire d'une attache secondaire (43) à l'aéronef, ladite rotule étant disposée pour reprendre la charge de la vis en cas de défaillance de la voie primaire, ladite sphère (40) venant alors en contact avec ladite rotule (41, 42),
• un pion ruptible (1) traversant une pièce liée à la rotule (46) et une pièce (45) solidaire de la sphère, de sorte qu'un transfert de la charge vers la voie secondaire se traduit par un cisaillement entre la pièce liée à la rotule et ladite pièce solidaire de la sphère, provoquant la rupture dudit pion, ledit vérin étant **caractérisé en ce qu'**il comporte des moyens de détection de la rupture du pion (1) permettant de déterminer une défaillance de la voie primaire, et des moyens de vérification, sans rupture du pion, du fonctionnement desdits moyens de détection, de manière à s'assurer du bon état de fonctionnement du pion(1) .

18. Vérin selon la revendication 17, **caractérisé en ce que** ladite pièce solidaire de la sphère est un cylindre de cisaillement (45) :
• dont l'une des extrémités pénètre dans la sphère (40), un élément roulant (44) étant intercalé entre la sphère et le cylindre de manière à ce que la sphère ne transmette pas son mouvement de rotation audit cylindre,
• et dont l'autre des extrémités comporte des bras adaptés pour accueillir chacun l'extrémité inférieure du pion (1).

19. Vérin selon la revendication 18, **caractérisé en ce que** le pion ruptible
(1) comporte un plateau supérieur (7) à celle de ses extrémités qui ne pénètre pas dans l'un des bras dudit cylindre de cisaillement (45) et **en ce qu'**un premier organe de rappel élastique (8) s'appuyant d'une part sur ledit plateau supérieur (7), d'autre part sur ladite pièce (46) liée à la rotule produit une force d'écartement sur le pion (1), de sorte que la rupture du pion (1) provoque un écartement des deux parties du pion (1) séparées par la rupture.

20. Vérin selon la revendication 19, **caractérisé en ce qu**'il comporte en outre :
• un plateau inférieur (12) entourant le pion (1) et disposé entre ledit plateau supérieur (7) et ladite pièce (46) liée à la rotule,
• un deuxième organe de rappel élastique (13) s'appuyant sur ledit plateau inférieur (12) et ladite pièce (46) liée à la rotule de sorte que lesdits plateaux supérieur (7) et inférieur (12) puissent être écartés l'un de l'autre lorsque :
- en cas de rupture du pion (1), sous l'action dudit premier organe (8) de rappel, la partie du pion (1) comportant le plateau supérieur (7) est éloignée de ladite pièce (46) liée à la rotule,
- en cas d'application d'une force sur le plateau inférieur (12) mettant ledit deuxième organe de rappel (13) sous tension, le plateau inférieur (12) est rapproché de ladite pièce (46) liée à la rotule.

21. Vérin selon l'une des revendications 16 ou 20, **caractérisé en ce que** lesdits moyens de détection comportent :
• au moins une paire de contacts électriques, chacun desdits contacts (14, 15) d'une paire étant disposé sur l'un respectivement desdits plateaux inférieur (12) et supérieur (7) de manière a ce que lesdits contacts (14, 15) soient en contact deux à deux, assurant ainsi une liaison électrique,
• des moyens (16) aptes à déterminer si les capteurs sont en contact ou non par détection de la rupture de ladite liaison électrique.

22. Vérin selon la revendication précédente, **caractérisé en ce que** lesdits moyens de vérification des moyens de détection comprennent des moyens permettant d'écarter les capteurs (14, 15), de manière à vérifier que lesdits moyens de détection identifient bien une rupture de la liaison électrique.

23. Vérin selon l'une des revendications 16 ou 20, dans lequel suite à la rupture du pion (1), la partie du pion comportant le plateau (7) est translatée sous l'action dudit premier organe (8), **caractérisé en ce que** lesdits moyens de détection sont constitués par des capteurs aptes à détecter une translation, notamment des capteurs parmi le groupe constitué des capteurs LVDT, des capteurs inductifs et des capteurs à effet Hall.

24. Vérin selon la revendication précédente, **caractérisé en ce que** lesdits moyens de vérification des moyens de détection comprennent des moyens permettant d'écarter les capteurs (14, 15), de manière à vérifier que lesdits moyens de détection identifient bien une translation d'une partie du pion (1)

25. Vérin selon l'une des revendications 22 ou 24, **caractérisé en ce que** lesdits moyens permettant d'écarter les capteurs (14, 15) comprennent un bouton poussoir (17) pouvant être actionné afin de venir appuyer sur le plateau inférieur (12), de manière à écarter le plateau inférieur (12) du plateau supérieur (7) en mettant le deuxième organe (13) de rappel sous tension.

## Claims

1. Device for detecting the transfer of the load on a screw of a movable member actuating jack from a primary path to a secondary path, the said secondary path being arranged to receive the load from the screw if the primary path fails, the said device comprising a breakable pin (1) passing through a first part (2) connected to the secondary path and a second part (3) connected to a member (5) fixed to the primary path, in such a way that a transfer of the load to the secondary path is manifested by shearing between the said parts (2, 3) through which the pin (1) passes, causing the breaking of the said pin (1), the said device being **characterized in that** it comprises:
- means (14, 15, 16) for detecting the breaking of the pin, indicating a failure of the primary path,
- means for checking the operation of the said detection means without breaking the pin (1), so as to provide assurance of the correct state of the pin.

2. Device according to Claim 1, **characterized in that** the breakable pin (1) has an upper plate (7) and **in that** a first resilient return member (8), which bears, at one end, on the said upper plate (7) and, at the other end, on the said second part (3) connected to a member fixed to the primary path, creates a spacing force on the pin (1), in such a way that the breaking of the pin (1) causes the two parts of the pin (1) separated by the break to be spaced apart from each other.

3. Device according to Claim 2, **characterized in that** it also comprises:
- a lower plate (12) surrounding the pin (1) and positioned between the said upper plate (7) and the said second part (3),
- a second resilient return member (13) bearing on the said lower plate (12) and the said second part (3) in such a way that the said upper plate (7) and lower plate (12) can be spaced apart from each other when:
- in the case in which the pin (1) breaks, the part of the pin (1) including the upper plate (7) is moved away from the said second part (3) under the action of the said first return member (8),
- in the case in which a force is applied to the lower plate (12), thus stressing the said second return member (13), the lower plate (12) is brought towards the said second part (3).

4. Device according to Claim 3, **characterized in that** the said detection means include:
- at least one pair of sensors, each of the sensors (14, 15) of each pair of sensors being positioned on a different one of the said lower (12) and upper (7) plates, in such a way that the said sensors (14, 15) face each other in a paired arrangement,
- means (16) for determining whether or not the spacing between the sensors is correct.

5. Device according to Claim 4, **characterized in that** the spacing of the sensors is considered to be incorrect when the spacing between the sensors (14, 15) has increased because of the breaking of the pin (1) or the application of a sufficient force to the lower plate (12).

6. Device according to either of Claims 4 and 5, **characterized in that** the correct spacing of the sensors is a zero spacing, the said sensors (14, 15) being dissociated only when the pin (1) breaks or when a sufficient force is applied to the lower plate (12).

7. Device according to Claim 6, **characterized in that** the sensors are electrical contacts (14, 15) and **in that** the said means (16) for determining whether or not the spacing between the sensors is correct are means for detecting the breaking of an electrical connection.

8. Device according to any one of Claims 4 to 7, **characterized in that** the said checking means of the detection means comprise means for spacing the sensors (14, 15), in order to check that the said detection means properly identify an incorrect spacing of the sensors.

9. Device according to Claim 8, **characterized in that** the said means for spacing the sensors (14, 15) comprise a push button (17) which can be pressed to bear on the lower plate (12), in such a way as to space the lower plate (12) apart from the upper plate (7) while stressing the second return member (13).

10. Device according to Claim 9, **characterized in that** the push button (17) has a stop plate (18) on which the upper plate (7) bears after the pin (1) breaks.

11. Device according to Claim 10, **characterized in that** the push button (17) has visual markers (20, 21) permitting the visual detection of the correct operation or failure of the primary path.

12. Device according to any one of Claims 3 to 11, **characterized in that** the said first and second resilient return members are helical springs (8, 13) surrounding the pin (1), and **in that** the said first return member (8) surrounds the said second return member (13).

13. Actuating jack for a movable member, comprising:
- a screw and a structure attachment by which the screw is connected to the movable member, the said structure attachment being doubled in that it comprises a primary path and a secondary path for actuating the said member, the said secondary path being provided to overcome a failure of the primary path, two nuts, namely a primary and a secondary nut, being engaged for this purpose with the screw and each being connected to the movable member by means of its own connection, a relative movement between the screw and the nuts producing the said actuation, the secondary nut being positioned to receive the load from the screw in case of failure of the primary nut,
- a breakable pin (1) passing through a neck (2) of the secondary nut and a lower part of a support (3) connected to a transfer plate (5) fixed to the connection between the primary nut and the movable member, in such a way that a transfer of the load to the secondary path is manifested by shearing between the neck (2) and the said support (3), causing the said pin (1) to break,
the said jack being **characterized in that** it includes means (14, 15, 16) for detecting the breaking of the pin (1), making it possible to discover a failure of the primary path, and means for checking the operation of the said detection means without breaking the pin, to provide assurance of the correct operating condition of the pin (1).

14. Jack according to Claim 13, **characterized in that** the neck (2) has a recess into which one of the ends of the pin (1) penetrates, the peripheral edge of the said recess being covered by the said lower part of the support (3) fixed to the transfer plate (5).

15. Jack according to Claim 14, **characterized in that** the breakable pin (1) has an upper plate (7) at its end which does not penetrate into the neck (2), and **in that** a first resilient return member (8), which bears, at one end, on the said upper plate (7) and, at the other end, on the said lower part of the support (3), creates a spacing force on the pin (1), in such a way that the breaking of the pin (1) causes the two parts of the pin (1) separated by the break to be spaced apart from each other.

16. Jack according to Claim 15, **characterized in that** it also comprises:
- a lower plate (12) surrounding the pin (1) and positioned between the said upper plate (7) and the said lower part of the support (3),
- a second resilient return member (13) bearing on the said lower plate (12) and the said lower part of the support (3) in such a way that the said upper plate (7) and lower plate (12) can be spaced apart from each other when:
- in the case in which the pin (1) breaks, the part of the pin (1) including the upper plate (7) is moved away from the said lower part of the support (3) under the action of the said first return member (8),
- in the case in which a force is applied to the lower plate (12), thus stressing the said second return member (13), the lower plate (12) is brought towards the said lower part of the support (3).

17. Actuating jack for a movable member of an aircraft, comprising:
- a screw and an aircraft attachment by means of which the screw is connected to the aircraft, the said aircraft attachment being doubled in that it comprises a primary path and a secondary path of attachment to the structure of the aircraft, the said secondary path being provided to overcome a failure of the primary path, the screw being fixed for this purpose with respect to rotation to a ball (40) of a bar for the primary attachment to the aircraft, the said ball rotating freely in a socket (41, 42) fixed to a secondary attachment (43) to the aircraft, the said socket being positioned to receive the load from the screw in case of failure of the primary path, the said ball (40) then coming into contact with the said socket (41, 42),
- a breakable pin (1) passing through a part (46) connected to the socket and a part (45) fixed to the ball, in such a way that a transfer of the load to the secondary path is manifested by shearing between the part connected to the socket and the said part fixed to the ball, causing the said pin to break,
the said jack being **characterized in that** it includes means for detecting the breaking of the pin (1), making it possible to discover a failure of the primary path, and means for checking the operation of the said detection means without breaking the pin, to provide assurance of the correct operating condition of the pin (1).

18. Jack according to Claim 17, **characterized in that** the said part fixed to the ball is a shear cylinder (45), of which:
- one end penetrates into the ball (40), a rolling element (44) being interposed between the ball and the cylinder in such a way that the ball does not transmit its rotary movement to the said cylinder,
- and the other end has arms adapted so that each can receive the lower end of the pin (1).

19. Jack according to Claim 18, **characterized in that** the breakable pin (1) has an upper plate (7) at its end which does not penetrate into one of the arms of the said shear cylinder (45), and **in that** a first resilient return member (8), which bears, at one end, on the said upper plate (7) and, at the other end, on the said part (46) connected to the socket, creates a spacing force on the pin (1), in such a way that the breaking of the pin (1) causes the two parts of the pin (1) separated by the break to be spaced apart from each other.

20. Jack according to Claim 19, **characterized in that** it also comprises:
- a lower plate (12) surrounding the pin (1) and positioned between the said upper plate (7) and the said part (46) connected to the socket,
- a second resilient return member (13) bearing on the said lower plate (12) and the said part (46) connected to the socket, in such a way that the said upper plate (7) and lower plate (12) can be spaced apart from each other when:
- in the case in which the pin (1) breaks, the part of the pin (1) including the upper plate (7) is moved away from the said part (46) connected to the socket under the action of the said first return member (8),
- in the case in which a force is applied to the lower plate (12), thus stressing the said second return member (13), the lower plate (12) is brought towards the said part (46) connected to the socket.

21. Jack according to either of Claims 16 and 20, **characterized in that** the said detection means include:
- at least one pair of electrical contacts, each of the said contacts (14, 15) of each pair being positioned on a different one of the said lower (12) and upper (7) plates, in such a way that the said contacts (14, 15) are in contact in a paired arrangement, thus forming an electrical connection,
- means (16) for determining whether or not the sensors are in contact, by detecting the breaking of the said electrical connection.

22. Jack according to the preceding claim, **characterized in that** the said checking means of the detection means comprise means for spacing the sensors (14, 15), in order to check that the said detection means properly identify an incorrect spacing of the sensors.

23. Jack according to either of Claims 16 and 20, in which, after the breaking of the pin (1), the part of the pin including the plate (7) is translated under the action of the said first member (8), **characterized in that** the said detection means are composed of sensors chosen from the group composed of LVDT sensors, inductive sensors and Hall effect sensors.

24. Jack according to the preceding claim, **characterized in that** the said checking means of the detection means comprise means for spacing the sensors (14, 15), in order to check that the said detection means properly identify a translation of one part of the pin (1).

25. Jack according to either of Claims 22 and 24, **characterized in that** the said means for spacing the sensors (14, 15) comprise a push button (17) which can be pressed to bear on the lower plate (12), in such a way as to space the lower plate (12) apart from the upper plate (7) while stressing the second return member (13).

## Patentansprüche

1. Vorrichtung zur Erfassung des Lastüberganges einer Schraubenspindel eines Betätigungsgliedes eines beweglichen Organs von einem Primärweg zu einem Sekundärweg, wobei der Sekundärweg dazu eingerichtet ist, die Last der Spindel im Falle des Ausfalls des Primärwegs zu übernehmen, wobei die genannte Vorrichtung einen Abreißstift (1) umfaßt, der ein erstes Teil (2), das mit dem Sekundärweg verbunden ist, und ein zweites Teil (3) durchsetzt, das mit einem Organ (5) verbunden ist, das fest mit dem Primärweg verbunden ist, so daß ein Übergang der Last zum Sekundärweg sich in eine Scherung zwischen den genannten Teilen (2, 3) übersetzt, die vom Stift (1) durchsetzt sind, die das Abreißen des genannten Stiftes (1) hervorruft, und wobei die genannte Vorrichtung **dadurch gekennzeichnet ist, daß** sie umfaßt:
• Mittel (14, 15, 16) zum Erfassen des Abreißen des Stiftes, was gestattet, einen Ausfall des Primärweges zu bestimmen, und
• Mittel zur Bestätigung der Funktion der genannten Mittel zum Erfassen, ohne Abreißen des Stiftes (1), derart, daß man sich vom guten Zustand des Stiftes überzeugt.

2. Vorrichtung nach Anspruch 1, **dadurch gekennzeichnet, daß** der Abreißstift (1) ein oberes Plateau (7) umfaßt, und daß ein erstes, elastisches Rückstellorgan (8), das sich einerseits auf dem genannten oberen Plateau (7) und andererseits auf dem genannten zweiten Teil (3) abstützt, das mit einem fest mit dem Primärweg verbunden Organ verbunden ist, über dem Stift (1) eine Spreizkraft erzeugt, so daß das Abreißen des Stiftes (1) eine Spreizung der beiden Teile des Stiftes (1) hervorruft, die durch das Abreißen getrennt werden.

3. Vorrichtung nach Anspruch 2, **dadurch gekennzeichnet, daß** sie außerdem umfasst:
• ein unteres Plateau (12), das den Stift (1) umgibt und zwischen dem genannten oberen Plateau (7) und dem genannten zweiten Teil (3) angeordnet ist, und
• ein zweites, elastisches Rückstellorgan (13), das sich auf dem genannten unteren Plateau (12) und dem genannten zweiten Teil (3) abstützt, so daß das genannte obere (7) und untere Plateau (12) voreinander entfernt werden können, wenn
- im Falle des Abreißens des Stiftes (1) unter der Wirkung des genannten ersten Rückstellorgans (8) der Teil des Stiftes (1), der das obere Plateau (7) umfaßt, vom genannten zweiten Teil (3) entfernt wird, und
- im Falle der Aufbringung einer Kraft auf das untere Plateau (12), die das genannten zweite Rückstellorgan (13) unter Spannung setzt, das untere Plateau (12) an das genannte zweite Teil (3) angenähert wird.

4. Vorrichtung nach Anspruch 3, **dadurch gekennzeichnet, daß** die genannten Erfassungsmittel umfassen:
• Meßfühler, wobei jeder der Meßfühler (14, 15) eines Meßfühlerpaares auf einem des genannten unteren (12) und oberen Plateaus (7) derart angeordnet sind, daß die genannten Meßfühler (14, 15) nebeneinander sind; und
• Mittel (16), die geeignet sind, es zu bestimmen, ob die Entfernung der Meßfühler regulär ist oder nicht.

5. Vorrichtung nach Anspruch 4, **dadurch gekennzeichnet, daß** die Entfernung zwischen den Meßfühlern als nicht regulär angesehen wird, sobald die Entfernung zwischen den Meßfühlern (14, 15) infolge der Tatsache des Abreißen des Stiftes (1) oder der Aufbringung einer ausreichenden Kraft auf das untere Plateau (12) zugenommen hat.

6. Vorrichtung nach einem der Ansprüche 4 oder 5, **dadurch gekennzeichnet, daß** die reguläre Entfernung der Meßfühler die einer Entfernung Null ist, wobei die genannten Meßfühler (14, 15) nur durch einen Bruch des Stiftes (1) oder die Aufbringung einer ausreichenden Kraft auf das untere Plateau (12) auseinandergebracht werden.

7. Vorrichtung nach Anspruch 6, **dadurch gekennzeichnet, daß** die Meßfühler elektrische Kontakte (14, 15) sind, und daß die genannten Mittel (16), die geeignet sind, zu bestimmen, ob die Entfernung zwischen den Meßfühlern regulär ist oder nicht, Mittel zum Erfassen der Unterbrechung einer elektrischen Verbindung sind.

8. Vorrichtung nach einem der Ansprüche 4 bis 7, **dadurch gekennzeichnet, daß** die genannten Mittel zur Bestätigung der Erfassungsmittel Mittel umfassen, die es gestatten, die Meßfühler (14, 15) voneinander zu entfernen, um sich auf diese Weise zu vergewissern, daß die genannten Mittel zur Erfassung eine nicht reguläre Entfernung der Meßfühler gut identifizieren.

9. Vorrichtung nach Anspruch 8, **dadurch gekennzeichnet, daß** die genannten Mittel, die es gestatten, die Meßfühler (14, 15) voneinander zu entfernen, einen Druckknopf (17) umfassen, der betätigt werden kann, um derart auf das untere Plateau (12) zu drücken, daß das untere Plateau (12) vom oberen Plateau (7) entfernt wird, indem man das zweite Rückstellorgan (13) unter Spannung setzt.

10. Vorrichtung nach Anspruch 9, **dadurch gekennzeichnet, daß** der Druckknopf (17) ein Halteplateau (18) umfaßt, gegen das das obere Plateau (7) infolge des Abreißens des Zapfens (1) stößt.

11. Vorrichtung nach Anspruch 10, **dadurch gekennzeichnet, daß** der Druckknopf (17) sichtbare Markierungen (20, 21) umfaßt, die eine optische Erfassung einer normalen Funktion oder eines Ausfalls des Primärweges gestatten.

12. Vorrichtung nach einem der Ansprüche 3 bis 11, **dadurch gekennzeichnet, daß** das genannte erste und zweite elastische Rückstellorgan wendelförmige Federn (8, 13) sind, die den Stift (1) umgeben, und daß das genannte erste Rückstellorgan (8) das genannte zweite Rückstellorgan (13) umgibt.

13. Stellglied zur Betätigung eines beweglichen Organs, umfassend:
• eine Schraubenspindel und eine Anbringungsstruktur, durch welche die Schraubenspindel mit dem beweglichen Organ verbunden ist, wobei die genannte Anbringungsstruktur **dadurch** verdoppelt ist, daß sie einen Primärweg und einen Sekundärweg zur Betätigung des genannten Organs umfaßt, wobei der genannte Sekundärweg dazu vorgesehen ist, einen Ausfall des Primärwegs zu ersetzen, wobei zwei Muttern, von denen eine eine Primärmutter und eine eine Sekundärmutter ist, hierzu rund um die Schraubenspindel in Eingriff stehen und jeweils mit dem beweglichen Organ über eine eigene Verbindung verbunden sind, und wobei die Sekundärmutter dazu ausgebildet ist, die Last der Schraubenspindel im Falle des Ausfalls der Primärmutter zu übernehmen, und
• einen abreißbaren Stift (1), der einen Lagerzapfen (2) der Sekundärmutter und einen unteren Teil eines Supports (3) durchsetzt, der mit einer Übertragungsplatte (5) verbunden ist, die fest mit der eigentlichen Verbindung der Primärmutter mit dem beweglichen Organ verbunden ist, so daß ein Lastübergang auf den zweiten Weg sich in eine Scherung zwischen dem Lagerzapfen (2) und dem genannten Support (3) übersetzt, die das Abreißen des genannten Stiftes (1) hervorruft,
wobei das genannte Stellglied **dadurch gekennzeichnet ist, daß** es Mittel (14, 15, 16) zur Erfassung des Abreißen des Stiftes (1), die es gestatten, einen Ausfall des Primärweges zu bestimmen, und Mittel zur Bestätigung der Funktion der genannten Erfassungsmittel ohne Abreißen des Stiftes umfaßt, um sich auf diese Weise vom guten Funktionszustand des Stiftes (1) zu versichern.

14. Stellglied nach Anspruch 13, **dadurch gekennzeichnet, daß** der Lagerzapfen (2) eine Ausnehmung darbietet, in die das eine der Enden des Stiftes (1) eindringt, wobei der Umfangsrand der genannten Ausnehmung vom genannten unteren Teil des Supports (3) abgedeckt wird, der fest mit der Übertragungsplatte (5) verbunden ist.

15. Stellglied nach Anspruch 14, **dadurch gekennzeichnet, daß** der abreißbare Stift (1) ein oberes Plateau (7) an dem seiner Enden umfaßt, das nicht in den Lagerzapfen (2) eindringt, und daß ein erstes, elastisches Rückstellorgan (8), das sich einerseits auf dem genannten, obere Plateau (7) und andererseits auf dem genannten, unteren Teil des Supports (3) abstützt, auf dem Stift (1) eine Trennkraft erzeugt, so daß das Abreißen des Stiftes (1) ein Auseinanderbewegen der beiden Teile des Stiftes (1) hervorruft, die durch das Abreißen getrennt wurden.

16. Stellglied nach Anspruch 15, **dadurch gekennzeichnet, daß** es außerdem umfaßt:
• ein untere Plateau (12), das den Stift (1) umgibt und zwischen dem genannten oberen Plateau (7) und dem genannten unteren Teil des Supports (3) angeordnet ist, und
• ein zweites elastisches Rückstellorgan (13), das sich auf dem genannten unteren Plateau (12) und dem genannten unteren Teil des Supports (3) derart abstützt, daß das genannte obere (7) und untere Plateau (12) voneinander entfernt werden können, wenn:
- im Falle des Abreißens des Stiftes (1) unter Wirkung des genannten, ersten Rückstellorgans (8) der Teil des Stiftes (1), der das obere Plateau (7) umfaßt, vom genannten unteren Teil des Supports (3) entfernt wird, und
- im Fall der Aufbringung einer Kraft auf das untere Plateau (12), das das genannte zweite Rückstellorgan (13) unter Spannung setzt, das untere Plateau (12) an den genannten, unteren Teil des Supports (3) angenähert wird.

17. Stellglied zur Betätigung eines beweglichen Organs eines Luftfahrzeugs, umfassend:
• eine Schraubenspindel und eine flugzeugseitige Anbringung, mit der die Schraubenspindel mit einem Luftfahrzeug verbunden ist, wobei die genannte flugzeugseitige Anbringung dahingehend verdoppelt ist, daß sie einen Primärweg und einen Sekundärweg der Anbringung an den Aufbau des Luftfahrzeugs umfaßt, wobei der genannte Sekundärweg dazu vorgesehen ist, bei einem Ausfall des Primärwegs einen Ersatz zu bieten, die Schraubenspindel hierzu mit einer Kugel (40) einer Primär-Anbringungsstange am Flugzeug drehbar verbunden ist, sich die genannte Kugel frei in einem Kugelgelenk (41, 42) dreht, das fest mit einer Sekundäranbringung (43) an das Luftfahrzeug verbunden ist, wobei das genannte Kugelgelenk angeordnet ist, um die Last im Fall eines Ausfalls des Primärwegs zu übernehmen, und die genannte Kugel (40) dann in Berührung mit dem genannten Kugelgelenk (41, 42) gelangt, und
• einen abreißbaren Stift (1), der ein mit dem Kniegelenk verbundenes Teil (46) und ein mit der Kugel fest verbundenes Teil (45) durchsetzt, so daß dann, wenn ein Ladungsübergang nach dem Sekundärweg durch Scherung zwischen dem mit dem Kniegelenk verbundenen Teil und dem genannten, mit der Kugel fest verbundenen Teil erfolgt, das Abreißen des Stiftes hervorgerufen wird,
wobei der Stellantrieb **dadurch gekennzeichnet ist, daß** er Mittel zum Erfassen des Bruchs des Stiftes (1) umfaßt, die es gestatten, einen Ausfall des Primärweges zu bestimmen, und Mittel zur Bestätigung, über der Funktion der genannten Erfassungsmittel ohne Abreißen des Stiftes, so daß man sich vom guten Funktionszustand des Stiftes (1) überzeugen kann.

18. Stellglied nach Anspruch 17, **dadurch gekennzeichnet, daß** das genannte, mit der Kugel fest verbundene Teil ein Scherzylinder (45) ist:
• bei dem das eine der Enden in die Kugel (40) eindringt, wobei ein rollendes Element (44) zwischen der Kugel und dem Zylinder derart eingeschoben ist, daß die Kugel ihre Drehbewegung nicht auf den Zylinder überträgt, und
• dessen anderes Ende Arme aufweist, die geeignet sind, jeweils das untere Ende des Stiftes (1) aufzunehmen.

19. Stellglied nach Anspruch 18, **dadurch gekennzeichnet, daß** der abreißbare Stift (1) ein oberes Plateau (7) an dem seiner Enden umfaßt, das nicht in einen der Arme des genannten Scherzylinders (45) eindringt, und daß ein erstes elastisches Rückstellorgan (8), das sich einerseits auf dem genannten oberen Plateau (7) und andererseits auf dem genannten Teil (46) abstützt, das mit dem Kugelgelenk verbunden ist, eine Trennkraft auf den Stift (1) ausübt, so daß das Abreißen des Stiftes (1) eine Auseinanderbewegung der beiden Teile des Stiftes (1) hervorruft, die durch das Abreißen getrennt wurden.

20. Stellglied nach Anspruch 19, **dadurch gekennzeichnet, daß** es außerdem umfaßt:
• ein unteres Plateau (12), das den Stift (1) umgibt und zwischen dem genannten oberen Plateau (7) und dem genannten Teil (46) angeordnet ist, das mit dem Kugelgelenk verbunden ist, und
• ein zweites elastisches Rückstellorgan (13), das sich auf dem genannten unteren Plateau (12) und dem genannten Teil (46) abstützt, das mit dem Kugelgelenk verbunden ist, so daß das genannte obere (7) und untere Teil (12) sich auseinanderbewegen können, wenn
- im Fall des Abreißens des Stiftes (1) unter der Wirkung des genannten ersten Rückstellorgans (8) der Teil des Stiftes (1), der das obere Plateau (7) umfaßt, vom genannten Teil (46), das mit dem Kugelgelenk verbunden ist, entfernt wird, und
- im Fall der Aufbringung einer Kraft auf das untere Plateau (12), die das genannte zweite Rückstellorgan (13) unter Spannung setzt, das genannte untere Plateau (12) an das genannte Teil (46), das mit dem Kugelgelenk verbunden ist, angenähert wird.

21. Stellglied nach einem der Ansprüche 16 oder 20, **dadurch gekennzeichnet, daß** die genannten Erfassungsmittel umfassen:
• mindestens ein Paar elektrischer Kontakte, wobei jeder der genannten Kontakte (14, 15) eines Paares auf der einen beziehungsweise dem genannten unteren (12) und oberen (7) Plateau derart angebracht ist bzw. sind, daß die genannten Kontakte (14, 15), die paarweise in Kontakt stehen, so eine elektrische Verbindung sicherstellen, und
• Mittel (16), die dazu geeignet sind, zu bestimmen, ob die Meßfühler in Kontakt stehen oder nicht, und zwar durch Erfassen des Abreißens der genannten elektrischen Verbindung.

22. Stellglied nach dem vorhergehenden Anspruch, **dadurch gekennzeichnet, daß** die genannten Bestätigungsmittel der Erfassungsmittel Mittel umfassen, die es gestatten, die Meßfühler (14, 15) so auseinanderzubewegen, daß man bestätigt erhält, daß die Erfassungsmittel gut ein Abreißen der elektrischen Verbindung identifizieren.

23. Stellglied nach einem der Ansprüche 16 oder 20, in dem, nachfolgend an das Abreißen des Stiftes (1), der Teil des Stiftes, der das Plateau (7) enthält, unter der Wirkung des genannten ersten Organs (8) versetzt wird, **dadurch gekennzeichnet, daß** die genannten Erfassungsmittel von Meßfühlern gebildet werden, die befähigt sind, eine Translation zu erkennen, besonders von Meßfühlern unter der Gruppe, die gebildet ist von den LVDT-Meßfühlern, den induktiven Meßfühlern und den Halleffekt-Meßfülern.

24. Stellglied nach dem vorhergehenden Anspruch, **dadurch gekennzeichnet, daß** die genannten Bestätigungsmittel der Erfassungsmittel Mittel umfassen, die es gestatten, die Meßfühler (14, 15) auseinanderzubewegen, um auf diese Weise zu bestätigen, daß die genannten Erfassungsmittel eine Translation eines Teils des Stiftes (1) gut identifizieren.

25. Stellglied nach einem der Ansprüche 22 oder 24, **dadurch gekennzeichnet, daß** die genannten Mittel, die es gestatten, die Meßfühler (14, 15) auseinanderzubewegen, einen Druckknopf (17) umfassen, der betätigt werden kann, um auf das untere Plateau (12) zu drücken, so daß das untere Plateau (12) vom oberen Plateau (7) entfernt wird, indem man das zweite Rückstellorgan (13) unter Spannung setzt.
